# FASCICULE DE BREVET EUROPEEN

(11) **EP 2 001 201 B1**
(45) Date de publication et mention de la délivrance du brevet: **22.09.2010**
(21) Numéro de dépôt: 08290511.8
(22) Date de dépôt: 03.06.2008
(51) Int. Cl.: H04L 29/06

(54) **Routage MMS utilisant un serveur de mandataire transparent**
MMS-Routing mit Hilfe eines transparenten Proxy-Servers
MMS routing using a transparent proxy server

(30) Priorité: 08.06.2007 FR 0704123
(43) Date de publication de la demande: 10.12.2008
(73) Titulaire: Alcatel Lucent, 75008 Paris (FR)
(72) Inventeur: Daniellou, Ronan, 91460 Marcoussis (FR); Verdot, Vincent, 91310 Montlhery (FR)
(74) Mandataire: Nicolle, Olivier

(56) Documents cités:
- EP-A- 1 011 244
- US-B1- 7 123 613
- STREAMING DOWNLOAD PROJECT: "MMS streaming protocol"[Online] 7 octobre 2003 (2003-10-07), pages 1-32, XP002467610 Extrait de l'Internet: URL:http://sdp.ppona.com/> [extrait le 2008-02-04]

## Description

L'invention concerne un procédé de routage dans un protocole de diffusion IP entre un terminal media et un serveur media par l'intermédiaire d'un serveur mandataire, un réseau de diffusion, ainsi qu'un serveur mandataire et un noeud de routage pour un tel réseau.

L'invention s'applique à un protocole de diffusion de type MMS (Microsoft Media Services) qui permet la diffusion de flux vidéo et audio par internet vers des terminaux clients, tel que notamment décrit dans l'article << MMS Streaming Protocol >> CURL/ http://sdp.ppona.com/.)

Pour ce faire, le protocole utilise des paquets IP intégrant un champ principal comprenant l'adresse IP de routage, un champ de texte et un champ Host pouvant comprendre une autre adresse IP. Dans le cas de l'utilisation d'un serveur mandataire (Proxy en anglais), le champ principal comprend l'adresse IP du serveur mandataire et le champ Host comprend l'adresse IP du serveur média. Ainsi, il est possible de supporter l'utilisation d'un serveur mandataire transparent pour le client.

Un serveur mandataire est nécessaire pour les opérateurs et les fournisseurs de services du réseau en ce que son utilisation permet de contrôler les messages de connexion et d'offrir des services additionnels, par exemple des environnements sécurisés ou des services de chargement ou de continuité des sessions.

Par exemple, le document EP-1 011 244 décrit un procédé de réacheminement transparent d'une demande de connexion HTTP, acheminée vers un serveur d'origine vers une cache mandataire sur un réseau informatique à paquets.

Toutefois, selon le logiciel MMS utilisé en tant que client, les champs Host ne sont pas nécessairement implémentés et le champ principal comprend alors l'adresse IP du serveur média. Par conséquent, il peut manquer au sein des requêtes en connexion des informations permettant à un serveur mandataire de traiter le message de connexion de façon transparente.

Et, il n'existe pas de solution pour utiliser un serveur mandataire de façon transparente si le terminal media n'ajoute pas d'information spécifique relative au serveur mandataire au sein des messages de connexion MMS.

L'invention a pour but de pallier les problèmes de l'art antérieur en intégrant un nouveau composant au coeur du réseau, au niveau de l'opérateur de réseau, sur le passage du message de connexion MMS. Selon l'invention, il n'est pas nécessaire de procéder à des modifications au niveau du client ou du serveur media, le procédé étant mis en oeuvre de façon transparente pour le client autant que pour le serveur media.

Pour ce faire, l'invention propose notamment un procédé permettant d'assurer le routage du paquet IP de façon transparente entre un terminal média et un serveur média par l'intermédiaire d'un serveur mandataire, et ce de façon indépendante de l'utilisation par le terminal media du champ Host.

A cet effet et selon un premier aspect, l'invention propose un selon la revendication 1.

Selon un deuxième aspect, l'invention propose un selon le revendication 4.

Selon un troisième aspect, l'invention propose un serveur mandataire pour un tel réseau de diffusion, ledit serveur intégrant un moyen logiciel apte à réaliser la fonction de reformatage des paquets IP.

Selon un quatrième aspect, l'invention propose un noeud de routage IP pour un tel réseau de diffusion, ledit noeud intégrant un moyen logiciel apte à réaliser la fonction de redirection des paquets IP.

D'autres particularités et avantages de l'invention apparaîtront dans la description qui suit, faite en relation avec les figures jointes dans lesquelles :

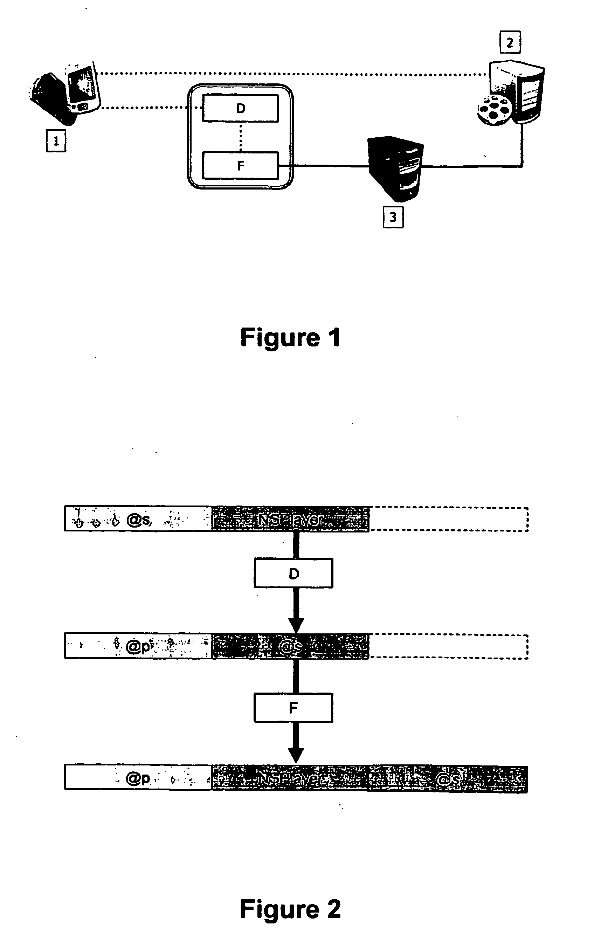

- la figure 1 représente une architecture générale de mise en place du procédé de routage des paquets IP selon l'invention ;
- la figure 2 représente un diagramme de séquence des modifications opérées sur un paquet IP lors de la mise en oeuvre du procédé selon l'invention.

L'invention concerne un procédé de routage dans un protocole de diffusion IP entre un terminal media 1 et un serveur media 2 par l'intermédiaire d'un serveur mandataire 3. Le protocole de diffusion est le protocole MMS (Microsoft Media Server).

Dans ce type de protocole de diffusion, lorsque le logiciel MMS ne supporte pas l'utilisation d'un serveur mandataire, les paquets IP intègrent :
- un champ principal de routage comprenant l'adresse IP @s du serveur media,
- un champ de texte NSPlayer,
- un champ Host pouvant comprendre l'adresse IP @s du serveur média.

Dans un exemple de réalisation, le procédé de routage est mis en oeuvre sur le message de connexion entre le terminal media et le serveur media.

Afin d'utiliser un serveur mandataire 3 de façon transparente, le message de connexion doit en premier lieu être routé vers lui. Cependant, si le champ Host du paquet IP est vide ou n'existe pas et que le champ principal comprend donc l'adresse IP du serveur média @s, le noeud de routage ne pourra pas connaître l'adresse de destination du serveur mandataire 3.

Par conséquent, lors du routage du paquet IP depuis le terminal media vers le serveur media 2, un test préalable est réalisé par un noeud de routage sur l'existence ou le contenu du champ Host de sorte à s'assurer que le champ Host du paquet IP comprend l'adresse @s du serveur média 2. En effet, à défaut, il en résulterait une absence de l'adresse @p du serveur mandataire 3 dans le champ principal, ce qui empêche l'utilisation d'un serveur mandataire 3.

Selon une réalisation, l'invention prévoit de modifier le paquet IP à la condition que le champ Host soit absent ou vide. Ces modifications comprennent le remplacement, dans le champ principal, de l'adresse IP @s du serveur media par l'adresse IP @p du serveur mandataire 3 et la conservation de l'adresse IP @s du serveur media dans le champ de texte par remplacement dudit texte NSPlayer par ladite adresse IP @s.

Ainsi, indépendamment de l'utilisation du champ Host par le terminal media, le paquet IP peut être routé vers le serveur mandataire 3 compte tenu du fait qu'il comprend l'adresse IP @p dudit serveur mandataire. En outre, l'adresse @s est conservée dans le paquet sans modification de sa taille, ce qui permet d'éviter l'ouverture d'une nouvelle session TCP/IP.

Un deuxième test est alors réalisé sur le contenu du paquet IP afin de s'assurer que le serveur mandataire 3 peut déterminer l'adresse du serveur média 2 pour la connexion en train d'être ouverte vers le serveur média 2 destinataire. Si le champ Host demeure absent ou vide, le procédé permet de compléter le paquet IP grâce aux informations précédemment conservées lors de la modification dudit paquet.

En pratique, le procédé permet d'ajouter le champ Host en le remplissant avec l'adresse IP @s du serveur media extraite du champ de texte. Dans le champ de texte, l'adresse IP @s du serveur media 2 est remplacée par le texte NSPlayer supprimé qui est connu puisque invariable.

A l'issue de ces deux étapes successives, le paquet IP comprend donc l'adresse IP @p du serveur mandataire 3 dans son champ principal, le texte NSPlayer dans le champ de texte et l'adresse IP @s du serveur media 2 dans le champ Host.

Par ailleurs, le procédé permet au paquet IP d'être parfaitement conforme pour le serveur mandataire 3, de sorte à être traité par ledit serveur. Par exemple, le service de continuité du flux media du serveur mandataire 3 collecte des informations relatives au message de signalisation routé par son intermédiaire afin d'adapter les futurs flux de sessions. Par conséquent, le client aura de meilleures opportunités pour permuter sa session d'un terminal media à un autre.

La solution proposée par l'invention est opérationnelle avec tout terminal ou serveur media MMS compte tenu du fait que le procédé consiste en la correction de façon transparente des messages de connexion qui sont malformés au regard de leur usage par un serveur mandataire 3.

La possibilité d'utiliser un serveur mandataire grâce au protocole MMS est une réelle valeur ajoutée pour les opérateurs et les fournisseurs de services du réseau en ce qu'elle permet de proposer des services enrichis relatifs à des applications de flux audio ou vidéo.

Le procédé décrit ci-dessus peut être mis en oeuvre dans un réseau de diffusion MMS d'un paquet IP entre un terminal media 1 et un serveur media 2 par l'intermédiaire d'un serveur mandataire 3.

Le réseau de diffusion comprend alors deux fonctions assurant le routage du message de signalisation entre le terminal media et le serveur media par l'intermédiaire du serveur mandataire, et ce de façon transparente.

La première fonction est celle de redirection D du paquet IP vers le serveur mandataire 3. Cette fonction de redirection D est apte à remplacer, dans le champ principal, l'adresse IP @s du serveur media par l'adresse IP @p du serveur mandataire et à conserver l'adresse IP @s du serveur média dans le champ de texte par remplacement dudit texte NSPlayer par ladite adresse IP.

La fonction de redirection des paquets IP est assurée par un noeud de routage du réseau de diffusion. Selon une réalisation, ce noeud de routage IP intègre un moyen logiciel permettant un test préalable sur le contenu du champ Host du paquet IP. Si le test réalisé par le noeud de routage permet d'établir que le champ Host est absent ou vide, la fonction de redirection est alors activée.

En outre, le réseau de diffusion comprend une seconde fonction dite de reformatage F du paquet IP. La fonction de reformatage F peut être activée uniquement à la condition que le champ Host nécessite un traitement.

Selon une réalisation, la fonction de reformatage F est implémentée dans le serveur mandataire 3 qui intègre alors un moyen logiciel apte à réaliser cette fonction de reformatage F des paquets IP.

La fonction de reformatage F est capable d'ouvrir deux canaux TCP/IP pour éviter la remise à zéro du canal par le terminal client qui attend une confirmation pour un certain volume de données. Or, la fonction de reformatage F ayant modifié le paquet IP, et donc sa taille, avant de le transmettre, le serveur media va confirmer la réception d'une quantité plus importante.

La fonction de reformatage F peut donc être directement placée entre la couche TCP/IP de la machine hébergeant le serveur mandataire 3 et le serveur mandataire 3 lui-même. En fait, le paquet IP est transmis à la couche logicielle, donc à la fonction de reformatage F, qui reformate le paquet IP avec le champ optionnel puis le transmet au serveur mandataire 3. Dans l'invention, la fonction de reformatage F peut donc être avantageusement incluse dans le serveur mandataire 3.

Cette fonction de reformatage est apte à ajouter le champ Host en le remplissant avec l'adresse IP @s du serveur média extraite du champ de texte, et à remplacer, dans le champ de texte, l'adresse IP @s du serveur média par le texte NSPlayer supprimé.

## Revendications

1. Procédé de routage dans le protocole de diffusion MMS, Microsoft Media Service, entre un terminal media (1) et un serveur media (2) par l'intermédiaire d'un serveur mandataire (3), ledit protocole utilisant des paquets IP intégrant un champ principal comprenant l'adresse IP (@s) du serveur media, un champ de texte NSPlayer et un champ Host pouvant comprendre l'adresse IP (@s) du serveur média (2), ledit procédé étant **caractérisé en ce qu'**il prévoit le routage du paquet IP vers le serveur mandataire (3) :
- en remplaçant, dans le champ principal, l'adresse IP (@s) du serveur media (2) par l'adresse IP (@p) du serveur mandataire (3) et en conservant l'adresse IP (@s) du serveur média (2) dans le champ de texte par remplacement dudit texte NSPlayer par ladite adresse IP (@s) ; puis
- en ajoutant le champ Host en le remplissant avec l'adresse IP (@s) du serveur média (2) extraite du champ de texte, et en remplaçant, dans le champ de texte, l'adresse IP (@s) du serveur média (2) par le texte NSPlayer supprimé.

2. Procédé de routage selon la revendication 1, **caractérisé en ce qu'**un test préalable est réalisé sur le contenu du champ Host, les modifications dans le paquet IP étant.effectuées à la condition que le champ Host soit absent ou vide.

3. Procédé de routage selon la revendication 1 ou 2, **caractérisé en ce qu'**il est mis en oeuvre sur le message de connexion entre le terminal media (1) et le serveur média (2).

4. Réseau de diffusion d'un paquet IP entre un terminal media (1) et un serveur media (2) par l'intermédiaire d'un serveur mandataire (3), ledit réseau, utilisant le protocole MMS, Microsoft Media Services, dans lequel les paquets IP intègrent un champ principal comprenant l'adresse IP (@s) du serveur média (2), un champ de texte NS Player et un champ Host pouvant comprendre l'adresse IP (@s) du serveur média (2), ledit réseau étant **caractérisé en ce qu'**il comprend une fonction de redirection du paquet IP qui est apte à remplacer, dans le champ principal, l'adresse IP (@s) du serveur media (2) par l'adresse IP (@p) du serveur mandataire (3) et à conserver l'adresse IP (@s) du serveur média (2) dans le champ de texte NSPlayer par remplacement dudit texte NSPlayer par ladite adresse IP (@s), et une fonction de reformatage du paquet IP qui est apte à ajouter le champ Host en le remplissant avec l'adresse IP (@s) du serveur média (2) extraite du champ de texte, et à remplacer, dans le champ de texte, l'adresse IP (@s) du serveur média (2) par le texte NSPlayer supprimé.

5. Réseau de diffusion selon la revendication 4, **caractérisé en ce que** la fonction de reformatage F est intégrée dans le serveur mandataire (3).

6. Serveur mandataire (3) pour un réseau de diffusion selon la revendication 5, **caractérisé en ce qu'**il intègre un moyen logiciel apte à réaliser la fonction de reformatage F des paquets IP.

7. Noeud de routage IP pour un réseau de diffusion selon la revendication 4, **caractérisé en ce qu'**il intègre un moyen logiciel apte à réaliser la fonction de redirection D des paquets IP.

8. Noeud de routage IP selon la revendication 7, **caractérisé en ce qu'**il intègre en outre un moyen logiciel permettant un test préalable sur le contenu du champ Host du paquet IP, la fonction de redirection étant activée à la condition que le champ Host soit absent ou vide.

## Claims

1. Method of routing in the Microsoft Media Services MMS distribution protocol between a media terminal (1) and a media server (2) through a proxy server (3), said protocol using IP packets integrating a main field comprising the IP address (@s) of the media server, an NSPlayer text field and a Host field which can include the IP address (@s) of the media server (2), said method being **characterized in that** it allows for the routing of the IP packet towards the proxy server (3):
- by replacing, in the main field, the IP address (@s) of the media server (2) with the IP address (@p) of the proxy server (3) and retaining the IP address (@s) of the media server (2) in the text field by replacement of said NSPlayer text with said IP address (@s); then
- by adding the Host field, completing it with the IP address (@s) of the media server (2) extracted from the text field, and replacing, in the text field, the IP address (@s) of the media server (2) with the deleted NSPlayer text.

2. Routing method according to claim 1, **characterized in that** a prior test is carried out on the content of the host field, the modifications in the IP packet being carried out on the condition that the host field is missing or blank.

3. Routing method according to claim 1 or 2, **characterized in that** it is implemented on the connection message between the media terminal (1) and the media server (2).

4. Distribution network for an IP packet between a media terminal (1) and a media server (2) through a proxy server (3), said network using the Microsoft Media Services MMS protocol in which the IP packets integrate a main field including the IP address (@s) of the media server (2), an NSPlayer text field and a Host field which can include the IP address (@s) of the media server (2), said network being **characterized in that** it includes a function for the redirection of the IP packet which is able to replace, in the main field, the IP address (@s) of the media server (2) with the IP address (@p) of the proxy server (3) and to retain the IP address (@s) of the media server (2) in the NSPlayer text field by replacement of said NSPlayer text with said IP address (@s), and a function for the reformatting of the IP packet which is able to add the Host field by completing it with the IP address (@s) of the media server (2) extracted from the text field, and to replace, in the text field, the IP address (@s) of the media server (2) with the deleted NSPlayer text.

5. Distribution network according to claim 4, **characterized in that** the reformatting function F is integrated into the proxy server (3).

6. Proxy server (3) for a distribution network according to claim 5, **characterized in that** it integrates a software resource capable of carrying out the reformatting function F of the IP packets.

7. IP routing node for a distribution network according to claim 4, **characterized in that** it integrates a software resource capable of carrying out the redirection function D of the IP packets.

8. IP routing node according to claim 7, **characterized in that** it also integrates a software resource allowing a prior test on the content of the host field of the IP packet, the redirection function being activated on the condition that the host field is missing or blank.

## Patentansprüche

1. Routing-Verfahren im MMS Microsoft Media Services-Broadcast-Protokoll zwischen einem Media-Terminal (1) und einem Media-Server (2) über einen Proxy-Server (3), wobei das besagte Protokoll IP-Pakete verwendet, welche ein Hauptfeld mit der IP (@s)-Adresse des Media-Servers, ein NSPlayer-Textfeld und ein Host-Feld, welches die IP (@s)-Adresse des Media-Servers (2) enthalten kann, aufweisen, wobei das besagte Verfahren **dadurch gekennzeichnet ist, dass** es das Weiterleiten des IP-Paketes an den Proxy-Server (3) plant, indem:
- Im Hauptfeld die IP (@s)-Adresse des Media-Servers (2) durch die IP (@p)-Adresse des Proxy-Servers (3) ersetzt wird und die IP (@s)-Adresse des Media-Servers (2) im Textfeld durch Ersetzen des besagten NSPlayer-Textes durch die besagte IP (@s)-Adresse beibehalten wird; und anschließend
- das Host-Feld hinzugefügt wird, indem darin die aus dem Textfeld extrahierte IP (@s)-Adresse des Media-Servers (2) eingetragen und im Textfeld die IP (@s)-Adresse des Media-Servers (2) durch den entfernten NSPlayer-Text ersetzt wird.

2. Routing-Verfahren nach Anspruch 1, **dadurch gekennzeichnet, dass** zuvor ein Test auf dem Inhalt des Host-Feldes durchgeführt wird, wobei die Änderungen im IP-Paket unter der Voraussetzung, dass das Host-Feld nicht vorhanden oder leer ist, ausgeführt werden.

3. Routing-Verfahren nach Anspruch 1 oder 2, **dadurch gekennzeichnet, dass** es auf der Nachricht zur Verbindung zwischen dem Media-Terminal (1) und dem Media-Server (2) implementiert wird.

4. Broadcast-Netzwerk eines IP-Paketes zwischen einem Media-Terminal (1) und einem Media-Server (2) über einen Proxy-Server (3), wobei das besagte Netzwerk das MMS Microsoft Media Services-Protokoll, in welchem die IP-Pakete ein Hauptfeld mit der IP (@s)-Adresse des Media-Servers (2), ein NSPlayer-Textfeld und ein Host-Feld, welches die IP (@s)-Adresse des Media-Servers (2) enthalten kann, aufweisen, verwendet, wobei das besagte Netzwerk **dadurch gekennzeichnet ist, dass** es eine Funktion zur Umleitung des IP-Paketes, welche fähig ist, im Hauptfeld die IP (@s)-Adresse des Media-Servers (2) durch die IP (@p)-Adresse des Proxy-Servers (3) zu ersetzen und die IP (@s)-Adresse des Media-Servers (2) im NSPlayer-Textfeld beizubehalten, indem der besagte NSPlayer-Text durch die besagte IP (@s)-Adresse ersetzt wird, und eine Funktion zur Neuformatierung des IP-Paketes, welche fähig ist, das Host-Feld hinzuzufügen, in dem darin die aus dem Textfeld extrahierte IP (@s)-Adresse des Media-Servers (2) eingetragen wird, und im Textfeld die IP (@s)-Adresse des Media-Servers (2) durch den entfernten NSPlayer-Text zu ersetzen, umfasst.

5. Broadcast-Netzwerk nach Anspruch 4, **dadurch gekennzeichnet, dass** die Funktion zur Neuformatierung F im Proxy-Server (3) integriert ist.

6. Proxy-Server (3) für ein Broadcast-Netzwerk nach Anspruch 5, **dadurch gekennzeichnet, dass** er ein Software-Mittel umfasst, welches fähig ist, die Funktion zur Neuformatierung F der IP-Pakete auszuführen.

7. IP-Routing-Knoten für ein Broadcast-Netzwerk nach Anspruch 4, **dadurch gekennzeichnet, dass** er ein Software-Mittel umfasst, welches fähig ist, die Funktion zur Umleitung D der IP-Pakete auszuführen.

8. IP-Routing-Knoten nach Anspruch 7, **dadurch gekennzeichnet, dass** er weiterhin ein Software-Mittel umfasst, um einen vorherigen Test auf dem Inhalt des Host-Feldes des Paketes P durchzuführen, wobei die Funktion zur Umleitung unter der Voraussetzung aktiviert wird, dass das Host-Feld nicht vorhanden oder leer ist.
